# EUROPÄISCHE PATENTSCHRIFT

(11) **EP 1 422 403 B1**
(45) Veröffentlichungstag und Bekanntmachung des Hinweises auf die Patenterteilung: **06.09.2006**
(21) Anmeldenummer: 03104186.6
(22) Anmeldetag: 13.11.2003
(51) Int. Cl.: F02C 7/143, F02C 3/30, F02C 7/045, F01N 3/04

(54) **Wassersprühvorrichtung für Gasturbinen**
Fogging device for gas turbines
Dispositif de vaporisation d'eau pour turbines à gaz

(30) Priorität: 25.11.2002 DE 10254825
(43) Veröffentlichungstag der Anmeldung: 26.05.2004
(73) Patentinhaber: Alstom Technology Ltd, 5400 Baden (CH)
(72) Erfinder: Bolis, Giacomo, 8050 Zürich (CH); Frutschi, Hans Ulrich, 5223 Riniken (CH)

(56) Entgegenhaltungen:
- WO-A-99/44722
- DE-A- 19 913 681
- US-A- 3 785 625
- US-A- 3 839 846
- US-A- 4 773 846
- US-A- 4 845 952
- US-A1- 2001 032 477
- US-B1- 6 216 443
- PATENT ABSTRACTS OF JAPAN vol. 2000, no. 15, 6. April 2001 (2001-04-06) & JP 2000 352320 A (NAKAMURA YOSHIHIDE), 19. Dezember 2000 (2000-12-19)

## Beschreibung

### TECHNISCHES GEBIET

Die vorliegende Erfindung betrifft eine Wassersprühvorrichtung zur Einbringung von

Wasser und/oder Dampf in einen Ansaugluftstrom einer Gasturbine, sowie deren Verwendung zur Leistungserhöhung in einer Gasturbine.

### STAND DER TECHNIK

Es ist bekannt, dass die Zuführung von Wasser oder Dampf, oder anderen geeigneten Flüssigkeiten respektive Mischungen von Flüssigkeiten in das Arbeitsmedium einer Gasturbine dazu verwendet werden kann, die durch eine Gasturbine erzeugbare Leistung zu erhöhen. Die zusätzliche Leistung wird dabei auf der einen Seite durch die Kühlwirkung des zugeführte Wassers ermöglicht, welche eine höhere Befeuerung der Gasturbine erlaubt. Auf der anderen Seite wird durch die Zuführung von Wasser respektive Dampf der Massenstrom, welcher die Turbinenblätter passiert, erhöht und damit auch die Leistung.

Wasser kann dabei entweder in Form von Dampf, d. h. in Form von Luftbefeuchtung zugeführt werden, oder aber in Form von kleinen Tropfen. Wasser kann mit anderen Worten oberhalb der Sättigungsgrenze zugeführt werden. Diese Technik, welche als "over-fogging" bekannt ist, wird üblicherweise durchgeführt, indem kleine Flüssigkeitstropfen einer bestimmten Grösse dem Luftstrom zugeführt werden, welcher in den Kompressor eingeleitet wird (so genannte "wet compression"). Diese Technik erlaubt es, die verfügbare Leistung der Gasturbine zu erhöhen, weil die zur Verdichtung der Eintrittsluft erforderliche Arbeit reduziert wird. Dies infolge der Tatsache, dass die Verdampfungsenergie des Eintrittsluftstroms diesen kühlt, wenn er die Kompressorstufen passiert.

Es gibt eine Vielzahl von Dokumenten, welche diese so genannte "wet compression" im Zusammenhang mit Gasturbinen beschreiben. So z. B. die US 5,930,990 sowie deren continuation-in-part, die US 5,867,977, welche beide einen Apparat sowie ein Verfahren zur Erhöhung der Leistung einer Gasturbine beschreiben unter Verwendung von "wet compression". Auf der anderen Seite beschreibt die WO 00/50739 eine spezielle Vorrichtung zur Überwachung von destruktiver "wet compression ", d. h. eine Vorrichtung, welche die bei diesem Verfahren auftretenden Verzerrungen der Gasturbine überwacht und gegebenenfalls die Zuführung von Wasser entsprechend steuert. Ein anderes Dokument in diesem Zusammenhang ist die US 6,216,443, in welchem ebenfalls eine Vorrichtung beschrieben wird, mit welcher kleine Flüssigkeitstropfen in den Eintrittsluftstrom des Kompressors eingebracht werden, wobei diese Einbringung zwischen Kompressor und stromab eines Schalldämpfers (so genannter "silencer") erfolgt. Die Tropfen, welche dem Luftstrom zugeführt werden, weisen dabei eine spezifische Tropfengrösse von zwischen 1 Mikrometer bis 50 Mikrometer auf. Eine weitere Schrift des gleichen Anmelders, die US 6,378,284, die Stammanmeldung zur genannten US 6,216,443, beschreibt eine Gasturbine, bei welcher Flüssigkeitstropfen dem Luftstrom vor dem Kompressor zugegeben werden, wobei diese Flüssigkeitstropfen wenigstens teilweise vor dem Eintritt in den Kompressor verdampfen und damit den Luftstrom kühlen, und anschliessend im Kompressor unter weiterer Abkühlung des Luftstroms vollständig verdampfen. Die Flüssigkeitstropfen werden dabei stromab eines Eintrittsblechs mit Luftschlitzen, hinter welchem üblicherweise ausserdem ein Luftfilter oder ein Schalldämpfer angeordnet ist, in den Luftstrom eingebracht.

Aus der US 2001/0032477 ist ein System zur evaporativen Kühlung der Eintrittsluft in eine Gasturbine beschrieben. Dabei ist entweder eine Spühvorrichtung oder ein Sumpf mit Wasser vorhanden, welcher den Eintrittsluftstrom anfeuchtet, sowie ein separat davon angeordneter Wärmetauscher. Der Wärmetauscher verfügt dabei über röhrenförmige Elemente, welche auch schalldämpfend ausgebildet sein können.

Weiterhin ist es aus dem Bereich der Erzeugung von Aerosol mit Wasser auch beispielsweise für die Anfeuchtung von Eintrittsluft für Gasturbinen aus der US 4,773,846 bekannt, Luft unter Hochdruck zuzuführen und in einem röhrenförmigen Leitungsabschnitt Wasser unter Hochdruck in diesen Luftstrom einzuführen. Der Austritt dieses Leitungsabschnittes wird in eine Kammer gerührt, welche von der eigentlichen Eintrittsluft durchströmt wird.

### DARSTELLUNG DER ERFINDUNG

Der Erfindung liegt demnach die Aufgabe zugrunde, eine Wassersprühvorrichtung zur

Einbringung von Wasser und/oder Dampf in einen Ansaugluftstrom einer Gasturbine zur Verfügung zu stellen. Derartige Wassersprühvorrichtungen werden, wie bereits eingangs erwähnt, zur Erhöhung der Leistung von Gasturbinen eingesetzt, da sich durch deren Verwendung der Massenstrom erhöht und die Temperaturen erniedrigt werden, somit eine höhere Befeuerung bei gleicher Materialbelastung ermöglicht wird.

Die Lösung dieser Aufgabe wird dadurch erreicht, dass bei einer Wassersprühvorrichtungzur Einbringung von Wasser und/oder Dampf in einen Ansaugluftstrom einer Gasturbine mehrere, im wesentlichen parallel zur Strömungsrichtung des Ansaugluftstroms angeordnete röhrenförmige Elemente vorgesehen werden, wobei Wasser und/oder Dampf über auf der Innenseite der röhrenförmigen Elemente angeordnete Düsen in den Innenraum eingedüst und in den Ansaugluftstrom eingebracht wird, wobei zwischen den Elementen Hohlräume vorhanden sind, und wobei diese Hohlräume mit Materialien mit schalldämpfender Wirkung gefüllt sind und/oder schalldämpfende Beschichtungen aufweisen.

Der Kern der Erfindung besteht somit darin, nicht, wie nach dem Stand der Technik üblich, z. B. ein einfaches Gitter als Wassersprühvorrichtung zu verwenden, sondern vielmehr eine Wassersprühvorrichtung, welche zusätzlich die im Zusammenhang mit der Einleitung der Eintrittsluft in den Kompressor entstehende hohe Schallbelastung zu reduzieren in der Lage ist. So kann entweder auf die Verwendung eines weiteren Schalldämpfers im Eintrittsluftstrom gänzlich verzichtet werden, oder aber es ist möglich, eine derartige Wassersprühvorrichtung mit einem bereits bestehenden Schalldämpfer zu kombinieren und so die Schallbelastung weiter zu reduzieren. Überraschenderweise kann so in einfacher Konstruktion entweder auf einen Schalldämpfer verzichtet werden oder aber die Schallbelastung weiter reduziert werden. Entsprechend eignet sich eine derartige Wassersprühvorrichtung ganz besonders im Zusammenhang mit der Nachrüstung von bereits bestehenden Anlagen.

Bekannte Schalldämpfer sind üblicherweise in Form von parallel zum Luftstrom und nebeneinander angeordneten Paketen von Röhren ausgebildet. Die Mittel werden auch nach der Erfindung als mehrere, im wesentlichen parallel zur Strömungsrichtung des Ansaugluftstroms angeordnete röhrenförmige Elemente ausgebildet. Überraschenderweise zeigt es sich, dass sich eine derartige schalldämpfende Konstruktion sehr gut mit der Einbringung von Wasser und/oder Dampf respektive von kleinen Wassertropfen kombinieren lässt, und dass sich sogar die Tropfenbildung durch die Strömungsverhältnisse in einer derartigen Röhrenkonstruktion vereinfacht bewerkstelligen lässt. Die schalldämpfende Wirkung einer derartigen Konstruktion lässt sich weiterhin verbessern, indem Hohlräume zwischen den Elementen schalldämpfend ausgebildet sind. Dies ist zum Beispiel möglich, indem entweder die röhrenförmigen Elemente mit entsprechenden Beschichtungen versehen werden, oder indem diese Zwischenräume mit speziellen, schalldämpfenden Materialien wie z. B. Schäumen ausgefüllt werden.

Gemäss einer weiteren bevorzugten Ausführungsform der vorliegenden Erfindung wird Wasser (z. B. in Form von kleinen Tropfen mit einer Tropfengrösse von im Bereich von 10 bis 50 µm) und/oder Dampf über Düsen in den Ansaugluftstrom eingebracht, wobei die Düsen auf der Innenseite der röhrenförmigen Elemente angeordnet sind, und das Wasser in den Innenraum eindüsen. Bevorzugt sind dabei pro Element wenigstens zwei Düsen auf dem Umfang verteilt vorhanden. Typischerweise werden z. B. 4 Düsen auf dem Umfang verteilt, wobei die Düsen entweder in Strömungsrichtung versetzt angeordnet sein können, oder aber in Strömungsrichtung auf der gleichen Höhe auf einem Umfang.

Eine weitere bevorzugte Ausführungsform der vorliegenden Erfindung zeichnet sich dadurch aus, dass die röhrenförmigen Elemente entlang ihrer Länge einen variablen Durchmesser aufweisen. Es muss sich mit anderen Worten nicht, wie dies üblicherweise bei Schalldämpfern der Fall ist, um zylindrische röhrenförmige Elemente handeln. Bevorzugt weisen die röhrenförmigen Elemente im mittleren Bereich eine Verjüngung auf, wobei die Verjüngung insbesondere derart ausgebildet ist, dass die Elemente eintrittseitig und austrittseitig im wesentlichen den gleichen Durchmesser aufweisen, und im mittleren Bereich einen um 20 bis 30% geringeren Durchmesser aufweisen. Mit anderen Worten verfügen die röhrenförmigen Elemente über eine Ausgestaltung wie ein Venturi-Rohr. Werden derartige spezielle röhrenförmige Elemente mit wenigstens einer Verjüngung verwendet, so zeigt es sich, dass die Einbringung von Wassertropfen in den Luftstrom ganz besonders gut unterstützt wird, wenn die Düsen im Bereich der Verjüngung angeordnet sind. Die Tropfenbildung wird dabei durch die im Bereich der Verjüngung erhöhte Strömungsgeschwindigkeit des Luftstroms unterstützt und entsprechend kann auf die üblicherweise verwendeten sehr komplexen und präzisen Düsen zur Erzeugung von Tröpfchen definierter Grösse unter Umständen verzichtet werden, da durch die Strömungsverhältnisse automatisch die Tröpfchen aufgerissen werden.

Eine andere bevorzugte Ausführungsform der Erfindung ist dadurch gekennzeichnet, dass wenigstens zwei tragende Wände im wesentlichen senkrecht zur Strömungsrichtung des Ansaugluftstroms angeordnet sind, zwischen welchen das Wasser zugeführt wird, und in welche die röhrenförmigen Elemente in durch die Wände hindurchtretender Weise eingelassen sind. So ergibt sich eine besonders stabile Konstruktion, welche ausserdem die Wasserzuführung zu den Düsen vereinfacht.

Weitere bevorzugte Ausführungsformen der erfindungsgemässen Wassersprühvorrichtung sind in den abhängigen Ansprüchen beschrieben.

Weiterhin beziehtsich vorliegende Erfindung auf eine Leistungserhöhung oder Leistungsregelung einer Gasturbine unter Verwendung einer Wassersprühvorrichtung, wie sie weiter oben beschrieben ist. Insbesondere bevorzugt kann dabei die Wassersprühvorrichtung derart angeordnet sein, dass das Wasser im wesentlichen unmittelbar stromauf einer ersten Kompressorstufe und/oder einer zweiten Kompressorstufe und gegebenenfalls stromab eines weiteren Schalldämpfers in den Ansaugluftstrom eingedüst wird.

### KURZE ERLÄUTERUNG DER FIGUREN

Die Erfindung soll nachfolgend anhand von Ausführungsbeispielen im Zusammenhang mit den Zeichnungen näher erläutert werden. Es zeigen:
- Fig. 1: eine schematische Darstellung einer Gasturbinenanlage mit zwei Kompressorstufen;
- Fig. 2: eine weitere schematische Darstellung einer Gasturbinenanlage und deren Luftzuführung zum Kompressor;
- Fig. 3: a) einen Schnitt durch eine Wassersprühvorrichtung senkrecht zum Luftstrom ;
b) eine Ansicht parallel zum Luftstrom auf eine Wassersprühvorrichtung gemäss Fig. 3a) ; und
- Fig. 4: einen detaillierten Teilschnitt durch ein einzelnes Venturi-Element einer Wassersprühvorrichtung.

### WEGE ZUR AUSFÜHRUNG DER ERFINDUNG

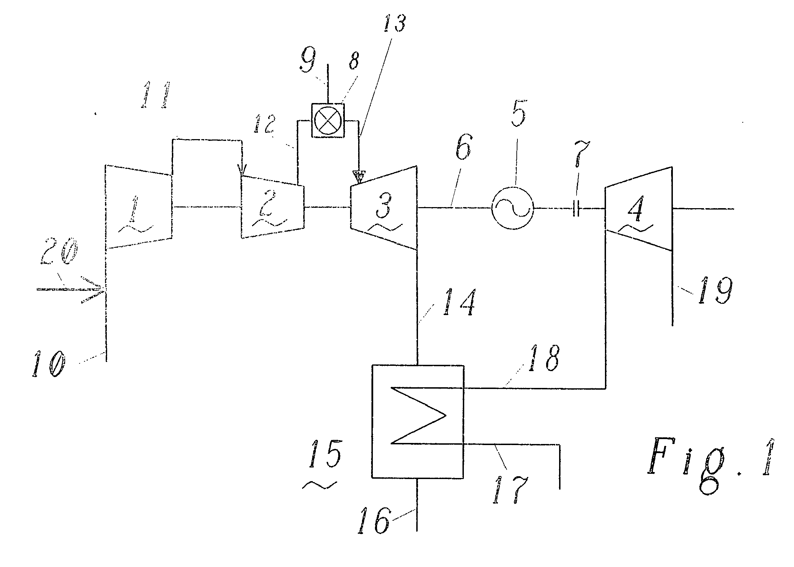

Fig. 1 zeigt in schematischer Darstellung eine Gasturbinenanlage, bei welcher typischerweise eine Wassersprühvorrichtung gemäss der Erfindung Anwendung finden kann. Die Anlage verfügt über eine erste Kompressorstufe 1, welche die Ansaugluft 10 auf eine erste Druckstufe bringt, sowie über eine zweite Kompressorstufe 2, bei welcher der teilweise komprimierte Ansaugluftstrom 11 auf die endgültige Druckstufe angehoben wird. Die vollständig komprimierte Ansaugluft 12 wird anschliessend einer Brennkammer 8 zugeführt, in welcher Brennstoff 9 verbrannt wird. Die heissen Verbrennungsgase 13 werden einer Gasturbine 3 zugeleitet, darin entspannt und die dabei entstehenden entspannten immer noch heissen Gase 14 werden in einem der Gasturbine 3 nachgeschalteten Abhitzekessel 15 weiter abgekühlt und erst stromab davon über ein Kamin 16 an die Umwelt abgegeben. Die beiden Kompressorstufen 1 und 2 sowie die Gasturbine 3 sind auf einer gemeinsamen Welle 6 angeordnet, diese Welle 6 treibt einen Generator 5 an. Im Abhitzekessel 15 wird zugeführtes Wasser 17 in einem gegebenenfalls mehrstufigen Prozess erhitzt und verdampft, und der entstehende Dampf 18 wird in einer Dampfturbine 4 zur weiteren Energiegewinnung entspannt. Die Dampfturbine 4 kann entweder an einem separaten Generator angeschlossen sein, oder aber, wie in Fig. 1 dargestellt, über eine Kopplung 7 an der gemeinsamen Welle 6 den gleichen Generator 5 antreiben.

Zur Leistungserhöhung wird nun über eine Wassersprühvorrichtung dem Ansaugluftstrom 10 Wasser 20 in Tröpfchenform zugeführt. In Fig. 1 ist dargestellt, wie Wasser vor der ersten Kompressorstufe 1 zugeführt wird, es ist aber möglich alternativ oder zusätzlich auch Wasser in den Pfad der teilweise komprimierten Ansaugluft 11 einzubringen.

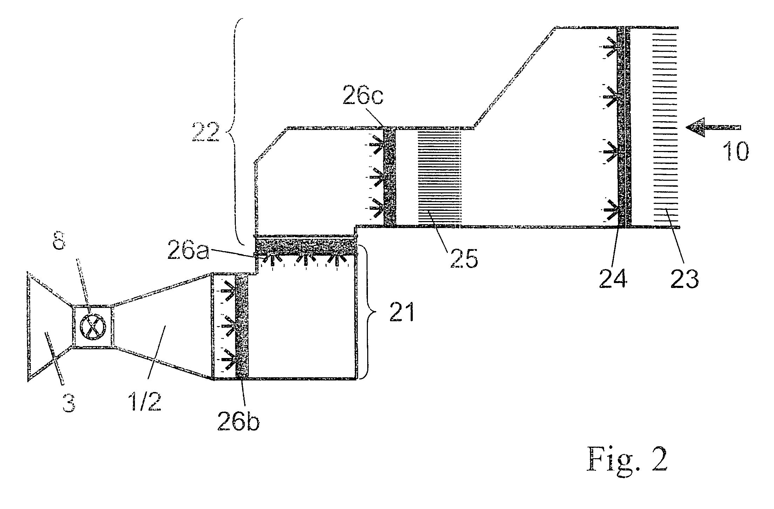

Fig. 2 zeigt eine schematische Darstellung des Ansaugluftpfades einer Gasturbinenanlage nach Fig. 1. Typischerweise wird die Ansaugluft 10 zunächst durch einen Filter 23 geführt, wobei diesem Filter gegebenenfalls ein mit Luftschlitzen versehene Wandung oder ein Blech vorgeschaltet ist. Ebenfalls im Pfad der Ansaugluft 10 befindet sich ein Schalldämpfer 25, welcher den beim Ansaugen entstehenden Lärm unterdrücken soll. Die erfmdungsgemässen Wassersprühvorrichtungen lassen sich in einem derartigen Ansaugpfad an unterschiedlichen Stellen anbringen. Einerseits ist es möglich, sie z. B. in Form einer Kühleinheit 24 stromab des Filters 23 und stromauf des Schalldämpfers 25 anzubringen. Da eine derartige Wassersprühvorrichtung ja selber über schalldämpfende Eigenschaften verfügt, kann grundsätzlich auch auf einen Schalldämpfer 25 verzichtet werden. Alternativ oder zusätzlich ist es möglich, eine derartige Wassersprühvorrichtung stromab des Schalldämpfers 25 anzuordnen. Dabei können derartige Wasser-Vernebelungsgitter bei einem gekrümmten Pfad, wie in Fig. 2 dargestellt, wo zunächst auf einer höheren Ebene ein Ansaugluft-Kanal 22 vorhanden ist und nach einer Umlenkung ein Ansaugluft-Kollektor 21, an unterschiedlichen Stellen angeordnet werden. Entweder innerhalb des Ansaugluft-Kanals 22 unmittelbar stromab des Schalldämpfers 25, wie mit dem Bezugszeichen 26c angedeutet ist, oder aber direkt bei der Stelle der Umlenkung gemäss Bezugszeichen 26a oder im wesentlichen unmittelbar vor dem Eingang in den Kompressor 1/2, wie dies mit dem Bezugszeichen 26b angedeutet ist.

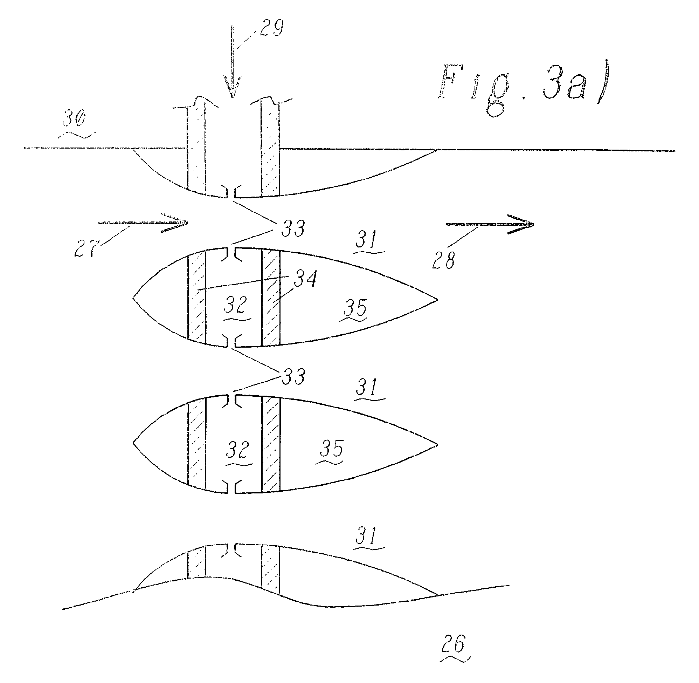

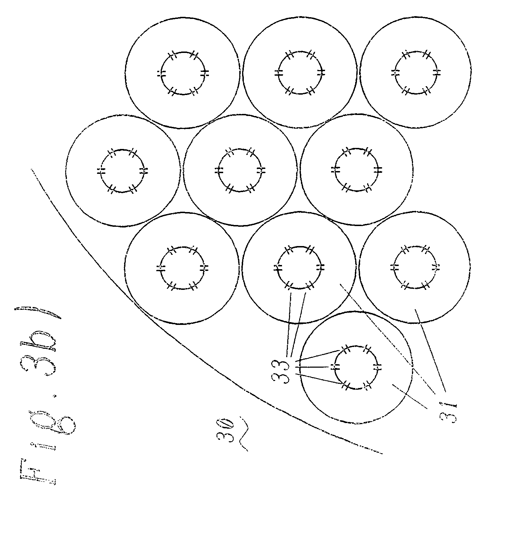

Wie sich eine erfindungsgemässe Wassersprühvorrichtung 26, welche gleichzeitig auch eine schalldämpfende Wirkung aufweist, tatsächlich konstruieren lässt, ist in Fig. 3 beispielhaft dargestellt. Die Wassersprühvorrichtung 26 umfasst dabei rohrförmige Elemente, welche in Fig. 3 als Venturi-Rohre 31 ausgebildet sind. Mit anderen Worten handelt es sich bei den Elementen 31 nicht um zylindrische Elemente sondern vielmehr um Röhren, welche im mittleren Bereich eine Verjüngung aufweisen. Die Strömung Geschwindigkeit in diesem Bereich der Verjüngung ist dabei wesentlich höher als beim Eintritt respektive beim Austritt aus der Röhre. Die einzelnen Venturi-Rohre 31 sind parallel nebeneinander in Strömungsrichtung der Ansaugluft angeordnet. Die einzelnen Venturi-Rohre 31 können kreisrunden Querschnitt aufweisen, wie dies in Fig. 3b) dargestellt ist, es ist aber auch möglich, um eine möglichst dichte Packung zu erlauben, die einzelnen Elemente mit vieleckigem Querschnitt auszubilden, z. B. als 6-ecke, sodass sich eine bienenwabenartige Anordnung realisieren lässt, bei welcher die Zwischenräume möglichst klein ausfallen. Wie in Fig. 3a erkennbar, wird die tragende Struktur einer derartigen Vorrichtung durch wenigstens zwei Wände 34 realisiert. Zwischen den zwei parallel zueinander und senkrecht zum Luftstrom angeordneten Wänden 34 kann in einfacher Weise die Zuführung des Wassers 29 realisiert werden. Die beiden Wände 34 verfügen entsprechend über Bohrungen, in welche die Venturi-Rohre 31 eingelassen respektive eingeschweisst sind. Die Ansaugluft 27 tritt in die einzelnen Elemente ein, und durch die Verjüngung des Querschnitts erhöht sich im Bereich dieser Verjüngung die Strömungsgeschwindigkeit. Im Bereich der Verjüngung sind auf dem Umfang einzelne Düsen 33 angeordnet, durch welche das zugeführte Wasser 29 in den mit hoher Geschwindigkeit strömenden Luftstrom eingedüst wird. Wie in Fig. 3b) sichtbar, sind z. B. 6 Düsen auf dem Umfang verteilt. Dabei werden die Düsen bevorzugt so ausgewählt, dass sich Tröpfchen einer Grösse im Bereich von 1 bis 50 µm ausbilden. Die Tröpfchenbildung wird durch die spezifische Strömung innerhalb des Venturi-Rohres 31 an der engsten Stelle weiter unterstützt. Entsprechend tritt stromab der Wassersprühvorrichtung 26 befeuchtete Luft 28 aus. Im Zwischenraum zwischen den einzelnen Venturi-Rohren 31 bilden sich Hohlräume 35. Diese Hohlräume können zur weiteren Unterstützung der schalldämpfenden Wirkung mit entsprechenden Materialien ausgefüllt werden. Dazu eignen sich z. B. spezielle Ausschäumungen. Die schalldämpfende Wirkung kann weiterhin durch entsprechende aus dem Bereich des Baus von Schalldämpfern konventioneller Art bekannte Beschichtungen unterstützt werden.

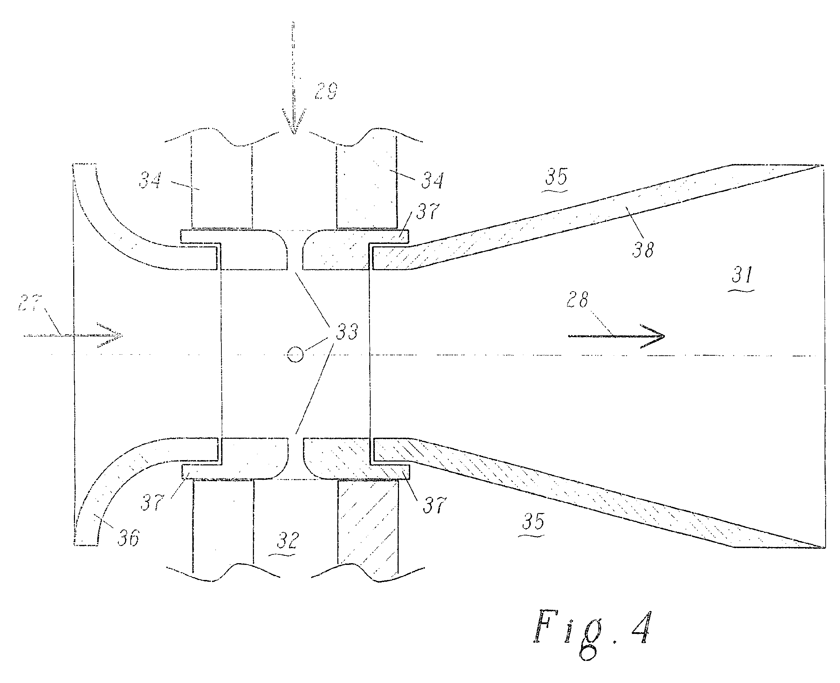

Fig. 4 zeigt ein weiteres Ausführungsbeispiel einer spezifischen Bauweise eines derartigen Venturi-Rohres 31. Zur Bildung einer gesamten Wassersprühvorrichtung werden derartige Venturi-Rohre 31 in möglichst dichter Packung nebeneinander angeordnet. Das Venturi-Rohr 31 ist in diesem Fall aus einzelnen Elementen aufgebaut, um die Konstruktion zu vereinfachen. Auf der Anströmseite befindet sich ein Einlasselement 36, welches gewissermassen trompetenförmig ausgebildet ist. Das Rohr 31 verfügt in seinem verjüngten Bereich über einen zylindrischen Abschnitt, welcher durch ein Ringelement 37 gebildet wird. Dieses Ringelement 37 verfügt auf seinem Umfang verteilt über in diesem Fall 4 Bohrungen, welche als Düsen 33 wirken. Stromab dieses Ringelements 37 ist ein Auslasselement 38 angeordnet, welches den Strömungsquerschnitt im wesentlichen auf den Strömungsquerschnitt beim Eintritt in das Element 36 erweitert und als Diffusor wirkt.

Diese Bauweise erlaubt eine einfache Konstruktion einer solchen Wassersprühvorrichtung, da in die zwei Seitenwände 34, zwischen welchen das Wasser 29 zugeführt wird, einfach entsprechend beabstandete durchgängige Bohrungen zur Verfügung gestellt werden müssen. Anschliessend können in diese Bohrungen die Ringelemente 37, welche über die präzise anzufertigenden Öffnungen 33 verfügen, eingesetzt werden und mit den Wänden 34 verschweisst werden. Alternativ ist es möglich, die Bohrungen mit einem Innengewinde zu versehen und die Ringelemente 37 mit einem entsprechenden Aussengewinde, sodass die Ringelemente 37 einfach in die Bohrungen eingeschraubt werden können. Anschliessend werden anströmseitig die Einlasselemente 36 in entsprechende im Ringelement 37 vorgesehene stufenförmige Erweiterungen eingesetzt, sodass die Innenwandung des entstehenden Rohres 31 möglichst glatt wird. Wiederum können die Elemente 36 entweder mit dem Ringelement 37 verschweisst oder verschraubt werden. Analog werden von der der Strömung abgewandten Seite her die Auslasselemente 38 in entsprechende Erweiterungen des Ringelementes 37 eingelassen und fest mit diesem verbunden.

Typischerweise verfügen derartige Venturi-Rohre 31 über einen Durchmesser beim Eintritt respektive Austritt von im Bereich von 20 bis 100 mm, und im verjüngten Bereich über einen Durchmesser von 30 bis 60 mm. Normalerweise sollte das Verhältnis zwischen Durchmesser am Eintritt und schmalster Stelle nicht grösser sein als 2, damit der durch die Verjüngung auftretende Strömungswiderstand im Ansaugpfad und die damit verbundenen Wirkungsgradverluste nicht zu gross werden.

### BEZUGSZEICHENLISTE

- 1: erste Kompressorstufe (niedriger Druck)
- 2: zweite Kompressorstufe (hoher Druck)
- 3: Gasturbine
- 4: Dampfturbine
- 5: Generator
- 6: Welle
- 7: Kupplung
- 8: Brennkammer
- 9: Brennstoffleitung, Brennstoff
- 10: Ansaugluft
- 11: teilweise komprimierte Ansaugluft
- 12: verdichtete Luft
- 13: heisse Verbrennungsluft, Heissgas
- 14: Abgas
- 15: Abhitzekessel
- 16: Kamin
- 17: Leitung zum Abhitzekessel (Wasser)
- 18: Leitung vom Abhitzekessel (Dampf)
- 19: Ausgang der Dampfturbine
- 20: Zuführung von Wasser zur Ansaugluft
- 21: Ansaugluft-Kollektor
- 22: Ansaugluft-Kanal
- 23: Filter
- 24: Kühleinheit
- 25: Schalldämpfer
- 26: Wasser-Vernebelungsgitter
- 27: Ansaugluft vor Vernebelungsgitter
- 28: befeuchtete Luft hinter Vernebelungsgitter
- 29: zugeführtes Wasser
- 30: Seitenwand von 21 respektive 22
- 31: Venturi-Rohr
- 32: Kanal für 29
- 33: Düsen
- 34: Seitenwände von 32
- 35: Hohlräume zwischen 31
- 36: Einlasselement von 31
- 37: Ringelemente
- 38: Auslasselement von 31

## Patentansprüche

1. Wassersprühvorrichtung (26) zur Einbringung von Wasser und/oder Dampf in einen Ansaugluftstrom (10, 27) einer Gasturbine (1-3), wobei die Wassersprühvorrichtung (26) mehrere, im wesentlichen parallel zur Strömungsrichtung des Ansaugluftstroms (10,27) angeordnete röhrenförmige Elemente (31) aufweist **dadurch gekennzeichnet, dass** Wasser und/oder Dampf über auf der Innenseite der röhrenförmigen Elemente (31) angeordnete Düsen (33) in den Innenraum eingedüst und in den Ansaugluftstrom eingebracht wird, wobei zwischen den Elementen (31) Hohlräume (35) vorhanden sind, und wobei diese Hohlräume (35) mit Materialien mit schalldämpfender Wirkung gefüllt sind und/oder die röhrenförmigen Elemente (31) schalldämpfende Beschichtungen aufweisen.

2. Wassersprühvorrichtung (26) nach Anspruch 1, **dadurch gekennzeichnet, dass** bevorzeigt pro, Element (31) wenigstens zwei Düsen (33) auf dem Umfang verteilt vorhanden sind.

3. Wassersprühvorrichtung (26) nach einem der Ansprüche 1 oder 2, **dadurch gekennzeichnet, dass** die röhrenförmigen Elemente (31) entlang ihrer Länge einen variablen Durchmesser aufweisen, wobei sie insbesondere bevorzugt im mittleren Bereich eine Verjüngung aufweisen, wobei die Verjüngung insbesondere derart ausgebildet ist, dass die Elemente (31) eintrittseitig und austrittseitig im wesentlichen den gleichen Durchmesser aufweisen, und im mittleren Bereich einen um 20 bis 30 % geringeren Durchmesser aufweisen.

4. Wassersprühvorrichtung (26) nach Anspruch 3, **dadurch gekennzeichnet, dass** die Düsen (33) im Bereich der Verjüngung angeordnet sind.

5. Wassersprühvorrichtung (26) nach einem der vorhergehenden Ansprüche, **dadurch gekennzeichnet, dass** wenigstens zwei tragende Wände (34) im wesentlichen senkrecht zur Strömungsrichtung des Ansaugluftstroms (10,27) angeordnet sind, zwischen welchen das Wasser (29) zugeführt wird, und in welche die röhrenförmigen Elemente (31) in durch die Wände (34) hindurchtretender Weise eingelassen sind.

6. Wassersprühvorrichtung (26) nach einem der vorhergehenden Ansprüche, **dadurch gekennzeichnet, dass** Wasser mit einer Tröpfchengrösse im Bereich von 10 bis 50 µm in den Ansaugluftstrom (10, 27) über Düsen (33) eingedüst wird.

7. Wassersprühvorrichtung (26) nach einem der vorhergehenden Ansprüche,
**dadurch gekennzeichnet, dass** als Material mit schalldämpfender Wirkung eine Ausschäumung der Hohlräume 35 vorgesehen ist.

8. Verwendung einer Wassersprühvorrichtung (26) nach einem der Ansprüche 1 bis 7.

## Claims

1. Fogging device (26) for introducing water and/or vapour into an intake air flow (10, 27) of a gas turbine (1-3), the fogging device (26) having a plurality of tubular elements (31) arranged essentially parallel to the direction of flow of the intake air flow (10, 27), **characterized in that** water and/or vapour is sprayed into the interior space and introduced into the intake air flow via nozzles (33) arranged on the inside of the tubular elements (31), cavities (35) being present between the elements (31), and these cavities (35) being filled with materials with a sound-absorbing effect, and/or the tubular elements (31) having sound-absorbing coatings.

2. Fogging device (26) according to Claim 1, **characterized in that** there are preferably at least two nozzles (33) distributed over the circumference per element (31).

3. Fogging device (26) according to either of Claims 1 and 2, **characterized in that** the tubular elements (31) have a variable diameter along their length, in which case they preferably have in particular a constriction in the center region, the constriction in particular being designed in such a way that the elements (31) have essentially the same diameter on the inlet side and outlet side and in the center region have a diameter which is smaller by 20 to 30%.

4. Fogging device (26) according to Claim 3, **characterized in that** the nozzles (33) are arranged in the region of the constriction.

5. Fogging device (26) according to one of the preceding claims, **characterized in that** at least two supporting walls (34) are arranged essentially perpendicularly to the direction of flow of the intake air flow (10, 27), between which walls (34) the water (29) is fed and into which the tubular elements (31) are admitted in such a way as to pass through the walls (34).

6. Fogging device (26) according to one of the preceding claims, **characterized in that** water having a droplet size within the range of 10 to 50 µm is sprayed into the intake air flow (10, 27) via nozzles (33).

7. Fogging device (26) according to one of the preceding claims, **characterized in that** foamed material in the cavities (35) is provided as material with a sound-absorbing effect.

8. Use of a fogging device (26) according to one of Claims 1 to 7.

## Revendications

1. Dispositif de vaporisation d'eau (26) pour introduire de l'eau et/ou de la vapeur dans un courant d'air d'admission (10, 27) d'une turbine à gaz (1-3), dans lequel le dispositif de vaporisation d'eau (26) présente plusieurs éléments (31) de forme tubulaire disposés essentiellement parallèlement au sens de l'écoulement du courant d'air d'admission (10, 27), **caractérisé en ce que** l'eau et/ou la vapeur est injectée par le biais de buses (33) disposées du côté intérieur des éléments (31) de forme tubulaire dans l'espace interne et est introduite dans le courant d'air d'admission, des espaces creux (35) étant prévus entre les éléments (31), et ces espaces creux (35) étant remplis de matériaux ayant un effet d'atténuation des sons et/ou les éléments (31) de forme tubulaire présentant des revêtements atténuant les sons.

2. Dispositif de vaporisation d'eau (26) selon la revendication 1, **caractérisé en ce que** de préférence pour chaque élément (31), au moins deux buses (33) sont disposées de manière répartie sur la périphérie.

3. Dispositif de vaporisation d'eau (26) selon l'une quelconque des revendications 1 ou 2, **caractérisé en ce que** les éléments (31) de forme tubulaire présentent un diamètre variable sur leur longueur, en présentant de préférence un rétrécissement dans la région centrale, le rétrécissement étant réalisé en particulier de telle sorte que les éléments (31) présentent du côté de l'entrée et du côté de la sortie substantiellement le même diamètre et qu'ils présentent un diamètre de 20 à 30% plus petit dans la région centrale.

4. Dispositif de vaporisation d'eau (26) selon la revendication 3, **caractérisé en ce que** les buses (33) sont disposées dans la région du rétrécissement.

5. Dispositif de vaporisation d'eau (26) selon l'une quelconque des revendications précédentes, **caractérisé en ce qu'**au moins deux parois portantes (34) sont disposées essentiellement perpendiculairement au sens de l'écoulement du courant d'air d'admission (10, 27), entre lesquelles l'eau (29) est acheminée, et dans lesquelles les éléments (31) de forme tubulaire sont introduits de manière à traverser les parois (34).

6. Dispositif de vaporisation d'eau (26) selon l'une quelconque des revendications précédentes, **caractérisé en ce que** l'eau est injectée par les buses (33) avec une taille de gouttelettes dans la plage de 10 à 50 µm dans le courant d'air d'admission (10, 27).

7. Dispositif de vaporisation d'eau (26) selon l'une quelconque des revendications précédentes, **caractérisé en ce que** l'on prévoit comme matériau ayant un effet d'atténuation des sons un moussage des espaces creux (35).

8. Utilisation d'un dispositif de vaporisation d'eau (26) selon l'une quelconque des revendications 1 à 7.
